Europäisches Patentamt

European Patent Office

Office européen des brevets

(11) Publication number: **0 429 729 A1**

# EUROPEAN PATENT APPLICATION

(21) Application number: 89312541.9

(22) Date of filing: 01.12.89

(51) Int. Cl.⁵: **H02K 23/54**, H02K 21/24, H02K 17/16

(43) Date of publication of application:
**05.06.91 Bulletin 91/23**

(84) Designated Contracting States:
**AT BE CH ES FR GB IT LI NL SE Bulletin 00/1**

(71) Applicant: **Adám, Pál**
**Pálya u. 124**
**H-1161 Budapest(HU)**

Applicant: **Gágyor, János**
**Wesselényi u. 71**
**H-1077 Budapest(HU)**

Applicant: **Kis, Gyula**
**Csonak u. 5**

**H-1015 Budapest(HU)**

(72) Inventor: **Adám, Pál**
**Pálya u. 124**
**H-1161 Budapest(HU)**
Inventor: **Gágyor, János**
**Wesselényi u. 71**
**H-1077 Budapest(HU)**
Inventor: **Kis, Gyula**
**Csonak u. 5**
**H-1015 Budapest(HU)**

(74) Representative: **Harrison, Ivor Stanley et al**
**Withers & Rogers 4 Dyer's Building Holborn**
**London EC1N 2JT(GB)**

(54) **Electric machines with ironcore disk armatures.**

(57) An electric machine has a disk-like armature (3) sandwiched, with the interposition of air gaps, between two disk-shaped pole pieces (6) which may be constituted by permanent magnets (4) or by soft-iron cores and associated induction coils. The armature consists of a winding (2) formed on a soft iron core disk (1) constituted by a strip of insulated dynamo sheet rolled into a tight spiral. The active portions of the armature winding extend radially over the faces, or in slots in the faces, of the core disk and are connected in series by portions which extend over the outer periphery and the inner periphery of the disk, the disk being annular or having apertures to accommodate them.

The pole pieces (4) have circumferentially alternating north and south poles, the two pole pieces being symmetrical about a median plane through the armature disk, perpendicular to its axis. Either the pole pieces or the armature may constitute the rotor of the machine. The winding of the armature may be a direct-current lap or wave winding that leads out to a commutator or an alternating-current single-phase or polyphase winding connected to slip rings. The rotor, whether the armature or the pole pieces, may incorporate a short-circuited squirrel-cage winding.

Fig. 1.

## ELECTRIC MACHINES WITH IRON-CORE DISK ARMATURES

The present invention relates to electric machines comprising an armature constituted by a winding supported on an iron core and a pole piece constituted by a hard magnetic material or by an induction winding on a soft iron core supported adjacent the armature on a common axis but separated therefrom by an air gap, the armature or the pole piece being rotatable and the or each winding being connectible in an electrical circuit.

The term electric machine is understood to include both electric motors and electrical generators and embodiments of the invention may be made in both forms.

Conventional electric machines are made up from cylindrical annular iron cores that are placed concentrically within each other. In such machines, the useful parts of the armature winding extend axially and are connected by long coil heads. The situation is similar in known disk armatures that do not contain an iron core and are situated in a single plain air gap. These coil head systems amount to a significant part of the whole winding; indeed they often exceed the amount of wire in the magnetic field and take up much room.

An object of the present invention is to provide an electric machine in which a much greater proportion of the winding plays an active part in the operation of the machine than in conventional machines.

Accordingly, the invention provides an electric machine of the type described above, characterised in that there are two such pole pieces; the armature and the pole pieces are generally disk-like and arranged with the armature sandwiched between the pole pieces; each pole piece has a circumferential arrangement of north and south poles in alternation, the arrangement of the two pole pieces being symmetrical about the medium plane of the armature perpendicular to the disk axis such that the directions of the magnetic fields in axially aligned portions of the two air gaps are opposite; and in that the active portions of the armature winding extend radially of the iron core disk.

In practice each pole piece consists of a permanent magnet or an electromagnet combined with a flux-linking disk located adjacent that surface remote from the armature.

In practice, in a winding formed by wire coils, one can consider the wire as split into active portions which extend radially on opposite sides of the core disk and are connected in series by parts, the coil heads, which extend axially over the inner or outer rim. If one considers one pair of such portions, the magnetic fields in the two air gaps being opposed, the e.m.f.s induced in the wire portions, in use, add up.

In the machine of the invention the active parts of the armature winding extend radially of the disk-like iron core, either across the surface or in slots in the surface, and these active parts are connected by relatively short coil heads at the periphery of the disk; generally the coil heads extend over the outer rim of the disk and over an inner rim, the disk being annular or being supported by spokes radiating from a hub and leaving gaps which accommodate the coil heads.

The coil heads may therefore, have a length substantially equal to the thickness of the disk. There is thus only a slight increase in the dimensions of the armature and the length of the connections is only a fraction of the useful radial wire. In consequence, this arrangement can result in a significant decrease in the overall dimensions and in the quantity of material used, as well as an increase in the specific power output and efficiency compared with conventional machines.

The magnetic field produced in the pole piece/armature sandwich of the basic functional unit of the invention is formed symmetrically relative to the central armature disk so that, at a given place in the central disk, the magnetic flux is tangential, then it splits into two branches and leaves the disk axially through the lateral face, then the branches travel through the air gap and enter the outer pole pieces where they turn back to the tangential direction and after covering a certain arc length return to the air gap; they then cross the air gap and go back into the central disk where the flux branches unite and the two symmetrical magnetic circuits close. In this way magnetic poles evolve along the air gaps on the surface of the iron core disks, which are north and south poles alternately around the air gap, and the same number of pairs of closed magnetic circuits emerge.

A specific feature of the pole configuration according to the invention is that this configuration is symmetrical about the median plane of the central disk perpendicular to the axis. The directions of the magnetic fields in the air gaps on the two sides of the central disk are thus opposite to each other. In consequence, assuming the machine is used as a generator and the armature is rotated between the pole pieces, e.m.f.s of opposite direction are induced in the two radial portions of the wire on opposite sides of the armature disk. These wires may, however, be connected in series by the pieces of wire, or coil heads, which extend over the inner and outer peripheries of the disk. The alternating connection of several radial wires on the two sides of the armature disk forms coils which can in turn be connected into a winding. The connections can be made in accordance with the various types of winding known in electric machines.

The basic functional unit constituting the machine of the invention may be combined with other similar units in a common housing, with a common rotor shaft or separate, coaxial shafts, each pair of adjacent pole peices of two such units being coupled together.

Further details and preferred embodiments of the invention will be described with reference to the appended drawings, wherein

Figure 1 shows a detail of the basic functional unit of an iron-cored disk-armatured electric machine;

Figure 2 shows a detail of a pole piece of a basic functional unit that is a magnetised by induction coils;

Figure 3 shows a detail of an alternative pole piece that is magnetised by induction coils;

Figure 4 shows a short-circuited, squirrel-cage version of the central disk armature of the basic functional unit;

Figure 5 shows a short-circuited, squirrel-cage version of a pole piece of the basic functional unit.

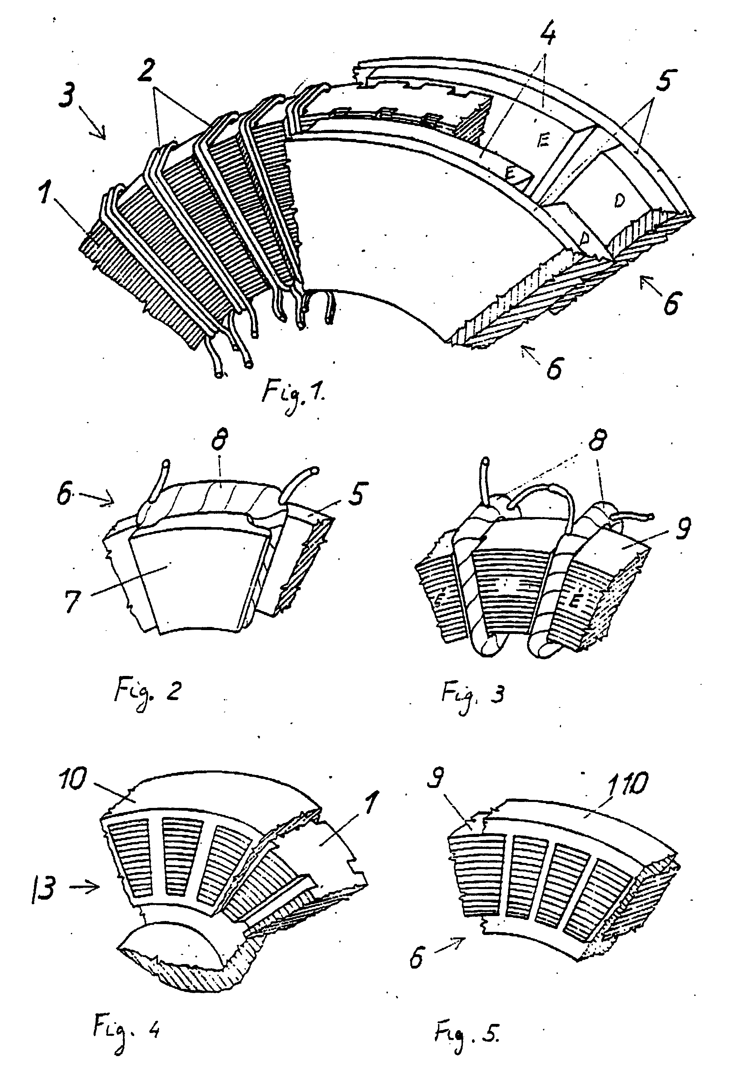

Figure 1 shows the basic functional unit of an electric machine which includes an armature, generally indicated 3, constituted by a central, annular, disk-like iron core and a series of coils 2 wound around the disk 1, either over its surface or in slots in the surface, and interconnected to form the armature winding. The iron core is, conveniently, made up from insulated dynamo sheet that is rolled into a tight spiral.

On either side of the central armature 3 is a disk-shaped magnetic pole unit generally indicated 6 including a pole piece proper indicated 4, made from magnetised, hard magnetic material. Outside these pole pieces 4 are flux-linking disks 5 which are made from soft magnetic material and which are fixed to the stator. The pole piece 4 is segmented and formed with circumferentially alternating north and south poles. Each pole unit 6 has substantially the same external diameter as the armature 3.

The central iron-cored disk armature 3 is fixed to the rotor shaft (not shown) which is supported in bearings. In this case the coils 2 are connected into closed windings and are led out to a commutator in accordance with the lap or wave winding techniques used in conventional direct-current machines.

In another embodiment, the central, iron-cored disk armature 3 is fixed to the stator while the flux linking disks 5 are fixed to the rotor shaft which is supported in bearings. In this case the coils 2 are connected into a single-phase or polyphase winding in accordance with the armature winding of alternating-current machines. The machine can thus be used as a synchronous machine or, forming a commutation circuit, as a direct-current motor without a commutator or, with the use of a rectifier, as a direct-current generator.

Figure 2 shows an alternative embodiment of a pole piece for use in a machine such as that partially shown in Figure 1. In this case the flux-linking disk 5 is combined into a unit, again indicated 6, with a pole piece 7. The pole piece 7 comprises an annular, soft-iron disk and associated induction coils, one of which is shown at 8, which magnetise the disk, in use, in a similar form to the disk magnet 4 of Figure 1.

The pole-piece combination 6 of Figure 2 may constitute the stator of the machine in which case the armature 3 is fixed to the rotor shaft of the machine. The armature winding may then be connected to a commutator, a series-connected or shunted direct-current machine being formed. If the flux-linking disks 5 and the soft magnetic poles 7 are made from insulated dynamo sheet, an alternating-current commutator-equipped and universal motor is obtained.

Figure 3 shows another possible embodiment of a pole piece, here indicated 9, with an induction winding 8. The pole piece 9 is made from insulated dynamo sheet, rolled into a spiral, for use with alternating-current induction.

With reference to Figure 4, this shows an alternative version of the central iron-cored disk armature 3 of Figure 1. This armature is constructed with a short-circuited squirrel-cage winding 10 and it forms the rotor. The two outer pole piece/flux linking disk combinations 6 that form the stator may have the construction shown either in Figure 2 or in Figure 3. They are made with a laminated iron core and an alternating-current winding. The machine constructed in this way corresponds to an inductive (asynchronous) machine.

In the embodiment shown in Figure 5, the pole piece, indicated 9, is formed with a short-circuited squirrel-cage winding 110 and is fixed to the rotor, shaft (not shown). In this case, the central iron-cored disk armature 3 is fixed to the stator and is formed with an alternating-current, single-phase or polyphase winding. This version can also be used as an inductive machine.

All versions of the iron-cored disk-armatured electric machine described above can be combined with other similar units in a common housing, on a common shaft or on two separate shafts. In certain versions the pole-piece/flux-linking disk combinations 6 that are placed side-by-side can be formed with common flux-linking disks, magnetised poles or induction coils, thereby decreasing the dimensions of the machine and the quantity of material used.

## Claims

1. An electric machine comprising an armature (3) constituted by a winding (2) supported on an iron core (1) and a pole piece unit (6) comprising a hard magnetic material (4) or an induction winding (8,110) on a soft iron core (7;9) supported adjacent the armature on a common axis but separated therefrom by an air gap, the armature (3) or the pole pieces (6) being rotatable about the axis, and means for connecting the or each winding in an electrical circuit characterised in that: there are two such pole piece units (6); the armature (3) and the pole units (6) are generally disk-like and arranged with the armature sandwiched between the pole pieces; each pole piece has a circumferential arrangement of north and south poles in alternation, the arrangement of the two pole pieces being symmetrical about the median plane of the armature perpendicular to the axis such that the directions of the magnetic fields in axially aligned portions of the two air gaps are opposite; and in that the active portions of the winding extend radially of the iron core disk.

2. An electric machine according to Claim 1, characterised in that the armature (3) constitutes the rotor and is fixed to a shaft extending axially of the armature disk and rotatable in bearings, the armature winding (2) is a lap or wave winding connected to a commutator and the pole piece units (6) are fixed to the stator.

3. An electric machine according to Claim 1, characterised in that the armature constitutes the rotor and has an alternating current winding connected at its ends to slip rings.

4. An electric machine according to Claim 1, characterised in that the armature (3) constitutes the rotor and its winding is a short circuited squirrel-cage winding (10).

5. An electric machine according to Claim 1, characterised in that the armature (3) is fixed to the stator and the coils of its winding (2) are connected in an alternating-current, single-phase or polyphase winding while the pole pieces (6) constitute the rotor and are fixed to a shaft which extends axially of the armature and the pole piece disks and is rotatable in bearings.

6. An electric machine according to Claim 5, in which the pole pieces (6) are constituted by soft iron disks (7) and associated induction windings (8), characterised in that the ends of the windings are connected to slip rings.

7. An electric motor according to Claim 5, characterised in that the pole pieces are constituted by soft iron disks (7; 9) and associated short-circuited induction coils (8) or short-circuited squirrel-cage induction windings (110).

8. An electric machine according to any one of the preceding claims, characterised in that the iron core disk (1) of the armature (3) is constituted by a strip of insulated dynamo sheet which is rolled into a spiral.

9. An electric machine according to any one of the preceding claims, characterised in that the coils of the armature winding (2) extend over the surface of the iron core (1).

10. An electric machine according to any one of Claims 1 to 8, characterised in that the coils of the armature winding (2) extend in slots in the surface of the iron core (1).

11. An electric machine according to any one of the preceding claims, characterised in that a flux-linking disk (5) is provided against that face of each pole piece (4; 9) opposite the face adjacent the armature (3).

12. An electric machine according to any one of the preceding claims in which the pole piece (6) comprises a soft iron core (9) and an induction winding (8), characterised in that the iron core disk (9) is constituted by a strip of insulated dynamo sheet which is rolled into a spiral.

13. An electric machine according to any one of the preceding claims, characterised in that it includes a plurality of units each constituted by an armature (3) sandwiched between two pole pieces (6) housed in a common housing on a common rotary axis, the adjacent pole pieces in each pair of adjacent units being coupled.

Fig. 1.

Fig. 2

Fig. 3

Fig. 4

Fig. 5.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-2541694 (SIEMENS)<br>* page 4, line 32 - page 6, line 27; figures 1-7a. * | 1, 2, 8, 9, 11. | H02K23/54<br>H02K21/24<br>H02K17/16 |
| X | US-A-3440464 (TOLMIE)<br>* column 4, line 66 - column 7, line 41 *<br>* column 9, line 52 - column 12, line 25; figures 3-7. * | 1, 2, 9, 11, 13. | |
| X | GB-A-717830 (BROOKE)<br>* page 1, line 10 - page 3, line 11; figures 1-3. * | 1, 3, 10. | |
| X | FR-A-1155050 (FERRARIO)<br>* page 1, left-hand column, line 31 - page 2, right-hand column, line 8; figures 1, 2. * | 1, 3-8, 10, 12, 13. | |
| X | DE-A-3142913 (WEH)<br>* page 1, lines 2 - 12; figure 1. * | 1, 5, 8, 10-12. | |
| A | US-A-4228378 (HUMBERT)<br>* column 1, line 64 - column 2, line 9; figures 1-5. * | 1, 2, 4, 10. | TECHNICAL FIELDS SEARCHED (Int. Cl.5 ) |
| E | WO-A-8912347 (ADAM ET AL)<br>* pages 6 - 8; figures 1-5. * | 1-13. | H02K |

The present search report has been drawn up for all claims

| Place of search | Date of completion of the search | Examiner |
|---|---|---|
| THE HAGUE | 26 JULY 1990 | TIO K.H. |